# EUROPÄISCHE PATENTSCHRIFT

(11) **EP 1 149 783 B1**
(45) Veröffentlichungstag und Bekanntmachung des Hinweises auf die Patenterteilung: **02.11.2006**
(21) Anmeldenummer: 01110375.1
(22) Anmeldetag: 26.04.2001
(51) Int. Cl.: B65G 69/16, B65G 11/20

(54) **Transportvorrichtung und Transportverfahren**
Transport device and method
Procédé et dispositif de transport

(30) Priorität: 26.04.2000 DE 10020427
(43) Veröffentlichungstag der Anmeldung: 31.10.2001
(73) Patentinhaber: Swisslog (Deutschland) GmbH, 71634 Ludwigsburg (DE)
(72) Erfinder: Lang, Hartmut, 73249 Wernau (DE)
(74) Vertreter: Rösler, Uwe

(56) Entgegenhaltungen:
- BE-A- 1 011 329
- DE-C- 474 112
- FR-A- 2 342 225

## Beschreibung

### I. Anwendungsgebiet

Die Erfindung betrifft ein Verfahren sowie eine Transportvorrichtung zum schonenden Abwärts-Transportieren von Waren mittels Schwerkraft gemäß dem Oberbegriff des Anspruchs 1 bzw, des Anspruchs 8.

### II. Technischer Hintergrund

Derartige Verfahren und Vorrichtungen werden insbesondere beim Kommissionieren von Waren, beispielsweise von Arzneimitteln, benötigt, wenn die Läger für die Waren eine erhebliche Erstreckung in vertikaler Richtung aufweisen, und - wie üblich - der Punkt, an dem die Waren verpackt werden, im unteren Höhenbereich der Läger liegt. In diesem Fall müssen die Waren nach der Entnahme aus dem Lager eine zum Teil erhebliche Höhendifferenz von mehreren Metern nach unten bis zur Ebene der Verpackung überwinden.

Hierfür werden bisher beispielsweise Aufzüge, etwa nach dem Paternoster-Prinzip, benutzt. Herstellung und Wartung derartiger Aufzüge sind jedoch relativ aufwendig, und auch die Ausfallwahrscheinlichkeit ist hoch.

Als einfachere Lösung werden schräge Rutschen benutzt. Um dabei einen großen Bedarf an Grundfläche zu vermeiden, sind diese Rutschen in der Regel als vertikal gerichtete Spirale ausgebildet. Nachteilig ist dabei, dass die Rutschgeschwindigkeit von der Masse und den Gleiteigenschaften der Ware abhängen. Da eine bestimmte Rutschgeschwindigkeit nicht überschritten werden soll, um keine Beschädigung oder Zerstörung der Ware zu riskieren, muss die Schräge der Rutsche und ihre Beschichtung nach den schwersten und gleitfähigsten Waren ausgerichtet sein. Dies hat zur Folge, dass besonders leichte und schlecht rutschende Waren unter Umständen auf der schrägen Ebene liegenbleiben oder zumindest unerwünscht langsam herabrutschen.

In der FR 1 603 116 wird ein gattungsgemäßes Verfahren und eine gattungsgemäße Vorrichtung beschrieben, bei der Schüttgut, d.h. ein Gemenge aus nicht voneinander unterscheidbaren Teilchen, durch einen abwärts gerichteten Kanal nach unten fällt. In dem Kanal ist ein gelenkig ausgebildetes Klappenmittel vorgesehen, das in Abhängigkeit des in den Kanal eingebrachten Eigengewichtes an Schüttgut zur Freigabe des Kanals nach unten ausgelenkt wird. Hierbei nimmt der Kanal durch die Schwenkbewegung des Klappenmittels zumindest zeitweise eine nach unten sich verjüngende Kanalform an.

Eine in der Funktionsweise zur vorstehenden Vorrichtung sehr ähnliche Vorrichtung ist der FR 2 121 466 zu entnehmen, die in der Art eines Fülltrichters mit anschließendem Transportkanal ausgebildet ist, mit der die Fall- oder Rutschgeschwindigkeit unterschiedlicher, stoßempfindlicher Schüttgüter, wie bspw. Agrarprodukte, am Ende des Fülltrichterkanals verlangsamt werden soll. Auch in diesem Fall dient ein an einer Trichterwand schwenkbar angelenktes Klappenelement zur Variation des Kanalsquerschnittes, um den Kanalsdurchgang gleichsam einer Ventilklappe gezielt zu versperren oder entsprechend frei zu geben.

### III. Darstellung der Erfindung

### a) Technische Aufgabe

Es ist daher die Aufgabe der vorliegenden Erfindung, ein Verfahren sowie eine diesbezügliche Vorrichtung zu schaffen, die trotz einfachem und wartungsarmem Aufbau Waren, auch unterschiedlicher Gestalt und Masse, sicher und mit kalkulierbarem Zeitbedarf nach unten transportiert. Letzteres ist gerade bei Anlagen mit nachgeschalteter automatischer Verpackung wichtig.

### b) Lösung der Aufgabe

Diese Aufgabe wird durch ein Transportverfahren sowie eine Transportvorrichtung mit den Merkmalen des Anspruches 1 bzw. des Anspruches 8 gelöst. Vorteilhafte Ausführungsformen des Verfahrens bzw. der Vorrichtung ergeben sich aus den Merkmalen der jeweils nachgeordneten Unteransprüche.

Das Grundprinzip der Vorgehensweise beruht darauf, die Waren in einem Kanal, der abwärts, insbesondere vertikal abwärts, gerichtet ist, hinabrutschen zu lassen. Der Grundflächenbedarf ist dadurch optimal gering. Selbstverständlich muss der freie Fall der Produkte in dem abwärtsgerichteten Kanal zuverlässig vermieden werden.

Dies wird erreicht, indem der Querschnitt des Kanals von einem sehr geringen, insbesondere bei Null beginnenden, Querschnitt als Ausgangssituation zeitlich definiert vergrößert wird, wobei die Vergrößerung in einer der Querschnittsrichtungen des Kanals hierbei ausreichend ist. Diese veränderbare Kanalbreite soll jedoch in jedem Zustand des Kanals sich von unten nach oben konisch erweitern.

Dadurch kann eine Ware, die am oberen Eingang des Kanals lagert, erst in den Kanal eindringen, wenn dessen Öffnung eine Größe erreicht hat, die mindestens der Größe des Produktes in dieser Querschnittsrichtung entspricht. Mit zunehmender Vergrößerung des Querschnitts in dieser Querschnittsrichtung rutscht die Ware im konischen Kanal weiter nach unten, ohne frei zu fallen.

Erst wenn auch der Ausgang am unteren Ende des Kanals in der variablen Breite, also hinsichtlich des Kanalquerschnittes, größer ist als der Querschnitt der Ware, kann diese den Kanal verlassen.

Die Beeinflussung der Rutschgeschwindigkeit im Kanal kann also entweder durch die Geschwindigkeit der Veränderung des Konuswinkels erfolgen, die zumindest in der ersten Bewegungsphase eine Vergrößerung des Konuswinkels ist, oder bei Konstanthaltung des Konuswinkels oder gar Abnahme des Konuswinkels in einer gleichzeitigen Verbreiterung des Kanals, indem sich dessen Wände voneinander weg bewegen.

Die Waren müssen dabei an dem Eingang des Kanals bevorrat sein, so dass sie allein aufgrund der Schwerkraft in den Kanal hineinrutschen, sobald sich dessen Eingang weit genug öffnet. Eine Möglichkeit des Herantransportierens der Waren besteht durch Heranrutschen auf einer schrägen Ebene in Form zum Beispiel einer Zufuhrrutsche. Die Zufuhrrutsche kann auch Teil eines vorgeschalteten analogen Kanals sein, beispielsweise eine der Seitenwände eines solchen vorangeschalteten Kanals.

Das Heraustransportieren aus dem Kanal erfolgt wiederum ausschließlich mittels Schwerkraft, beispielsweise indem die Ware aus dem Ausgang des Kanals in eine Auffangvorrichtung, entweder eine Auslaufrutsche oder ähnliches, fällt bzw. rutscht. Insbesondere ist hierfür eine Entnahmewanne geeignet, indem die Waren aus dem Kanal kommend auf die schräge eine Wand der Wanne rutschen und durch die so gewonnene kinetische Energie bis in die Nähe des anderen Endes der Wanne rutschen, wo sie liegen bleiben und von Hand oder automatisch entnommen werden können.

Bei einem derartigen Kanal ist es ausreichend, wenn zwei Wände des Kanals relativ zueinander beweglich sind. Die übrigen Wände des Kanals können fest angeordnet sein. Von den beiden relativ zueinander beweglichen Wänden wird in der Regel eine Kanalwand fest installiert, insbesondere vertikal verlaufend sein, und die andere Kanalwand hierzu beweglich sein.

Die bewegliche Wand wird dann bezüglich der festen Wand entweder so bewegt, dass der Konuswinkel dazwischen konstant gehalten wird und nur die Breite in Abstandsrichtung zwischen den Wänden vergrößert wird. Die andere Möglichkeit besteht darin, den Konuswinkel zwischen den beiden Wänden durch Schwenken der beweglichen Wand zu verändern, wodurch - bis auf den Schwenkpunkt - an jedem Punkt der Längserstreckung des Kanals auch die Breite des Kanals verändert wird.

Die Bewegung der beweglichen Wand läuft somit in der Regel zweiphasig ab:
- 1. Phase:: Vergrößerung des Konuswinkels zwischen den Wänden, insbesondere von Null aus beginnend.
- 2. Phase:: Vergrößerung des unteren Ausgangs des Kanals, insbesondere bei Null beginnend.

Erste und zweite Bewegungsphase können sich dabei wenigstens teilweise zeitlich überlagern. Insbesondere kann die zweite Bewegungsphase, nämlich die Öffnung des Ausgangs, durch eine Verringerung des Konuswinkels erzielt werden mit der Folge, dass die zwei Phasen durch nacheinander ablaufende erst Vergrößerung und anschließende Verringerung des Konuswinkels besteht, wodurch jedoch - für einen bestimmten Punkt des Verlaufes des Kanals betrachtet - dennoch eine Verbreiterung des Querschnitts an einer definierten Stelle einhergeht.

Bei Herantransportieren der Waren mittels der bereits erwähnten Zufuhrrutsche kann die bewegliche Kanalwand insbesondere mit der Zufuhrrutsche gelenkig verbunden sein. Je nachdem, ob die Zufuhrrutsche an ihrem oberen Ende zwar gelenkig, jedoch ortsfest an einer umgebenden Tragstruktur befestigt ist oder nicht, bewegt sich bei einer Bewegung der beweglichen Kanalwand das Gelenk zwischen Zufuhrrutsche und beweglicher Kanalwand entweder auf einer Kreisbogenbahn um das obere Endgelenk der Zufuhrrutsche, oder die Bewegung des Zwischengelenkes kann frei gewählt werden, insbesondere eine lineare Bewegung quer zur Längsrichtung des Kanals sein. Letzteres ist mechanisch einfacher zu bewerkstelligen, bewirkt jedoch eine Verschiebung der Zufuhrrutsche quer zur Längsrichtung des Kanals.

Die bewegliche Kanalwand wird mittels eines gesteuerten Motors angetrieben. Eine Möglichkeit besteht darin, dass der Motor einen Schwenkhebel antreibt, der an der beweglichen Kanalwand, insbesondere auf deren Rückseite, insbesondere in einer dort vorhandenen langlochartigen, in Längsrichtung der beweglichen Kanalwand sich erstreckenden, Führung angreift.

Im Ausgangszustand liegt dabei vorzugsweise die bewegliche Kanalwand an der festen Kanalwand an, und die Breite des Kanals ist quasi Null. Durch Verschwenken des Schwenkhebels, der im Mittenbereich, also zwischen deren oberen und unteren Ende, an der beweglichen Wand angreift, verschwenkt sich und bewegt dabei das obere Ende der beweglichen Kanalwand von der festen Kanalwand weg. Dies wird beispielsweise dadurch erreicht, dass der Schwerpunkt der durch den Schwenkhebel bewegten Einheit, also entweder nur die bewegliche Kanalwand oder die Einheit aus Kanalwand und Zufuhrrutsche oder auch noch weitere Bauteile, auf der vom Kanal abgewandten Seite des Angriffspunktes des Schwenkhebels an der beweglichen Wand liegt und/oder das obere Ende der beweglichen Wand durch bereit vor dem Eingang des Kanals liegende, herandrückende Waren von der festen Wand weggedrückt wird.

Durch weiteres Verschwenken des Schwenkhebels erreicht das obere Ende der beweglichen Wand, etwa das Gelenk zur Zufuhrrutsche hin, den maximal zulässigen, und beispielsweise durch einen Anschlag begrenzten, Abstand von der festen Kanalwand.

Bei weiterem Verschwenken des Schwenkhebels in die gleiche Schwenkrichtung wird sich in der Folge nun das untere Ende der beweglichen Wand von der festen Wand wegbewegen, wobei das obere Ende, etwa das Gelenk zur Zufuhrrutsche hin, als Schwenkachse dient.

Auf diese Art und Weise ist es möglich, die zweiphasige Bewegung der beweglichen Wand des Kanals durch nur einen einzigen Stellmotor und einen einzigen Schwenkhebel zu bewirken. Anstelle eines Schwenkhebels ist auch eine Linearbewegung quer zur Erstreckung der beweglichen Wand, beispielsweise realisiert durch eine motorisch angetriebene Gewindespindel etc., möglich.

Letzteres ist insbesondere im Zusammenwirken mit einem solchen Gelenk zwischen beweglicher Wand und Zufuhrrutsche vorteilhaft, welches eine Öffnung des Zwischenwinkels auf der kanalabgewandten Rückseite zwischen beweglicher Wand und Zufuhrrutsche über einen bestimmten Winkel, beispielsweise 180°, hinaus verhindert.

Eine weitere Möglichkeit besteht darin, die bewegliche Wand und die Zufuhrrutsche zusammen einstückig auszubilden aus einem wenigstens in Teilbereichen flexiblen Material.

Eine solche durchgehende Schräge könnte an ihrem obersten Punkt gelenkig an einem Punkt beabstandet von der festen Kanalwand angeordnet und mittels einer z. B. Stützrolle von der Rückseite her in Richtung Durchbiegung beaufschlagt sein. Beim Durchbiegen nähert sich der untere Teil des elastischen Bauteils an die feste Kanalwand an, bis zur Anlage an dieser festen Kanalwand, an der sich ja auch von Anfang an das untere Ende des elastischen Bauteils abstützen muss.

Durch Zurückziehen der vorspannenden Stützrolle wird der obere Eingang in den Kanal zunehmend geöffnet, bis das elastische Bauteil nicht mehr durchgebogen ist, sondern etwa gerade vom oberen gelenkigen Befestigungspunkt über die Stützrolle bis zum unteren, noch an der festen Kanalwand anliegenden Ende verläuft. Durch weiteres Zurückziehen der abstützenden Baugruppe öffnet sich das untere Ende des Kanals, und die darin befindlichen Waren können herausfallen.

### c) Ausführungsbeispiele

Ausführungsformen gemäß der Erfindung sind im folgenden beispielhaft näher beschrieben. Es zeigen in schematischer Darstellung:
- Fig. 1:: eine erste Bauform der neuen Vorrichtung in Blickrichtung des nicht variablen Kanalquerschnitts;
- Fig. 2:: eine andere Bauform des Kanals in gleicher Blickrichtung und
- Fig. 3:: eine dritte Bauform bei gleicher Blickrichtung.

Allen drei Figuren ist gemeinsam, dass der Kanal im wesentlichen vertikal verläuft, mit einer auf der linken Bildseite angeordneten festen, vertikal verlaufenden Kanalwand 5. Lediglich der Befestigung von Gelenken, Antriebseinheiten etc., jedoch ohne Funktion für das Herabtransportieren der Waren, dient eine auf der rechten Seite eingezeichnete Wand 5', die auch nur Teil eines Stützrahmens etc. sein kann und je nach Einbausituation überhaupt nicht benötigt wird.

Am unteren Ende des Kanals 2 befindet sich eine Auslaufwanne 13, die mit ihrem linken, schräg aufsteigenden Rand sich unterhalb der festen Kanalwand 5 befindet und insbesondere in diese übergehen kann, so dass aus dem unteren Ausgang 12 des Kanals herausgleitende Waren 1a,b.. auf die Innenseite dieses schrägen Randes der Wanne in die Wanne hineingleiten und vorzugsweise bis zu einem so weit rechts liegenden Punkt der Auslaufwanne 13 gleiten, dass der rechts von und damit außerhalb der Grundfläche des Kanals 2 liegt.

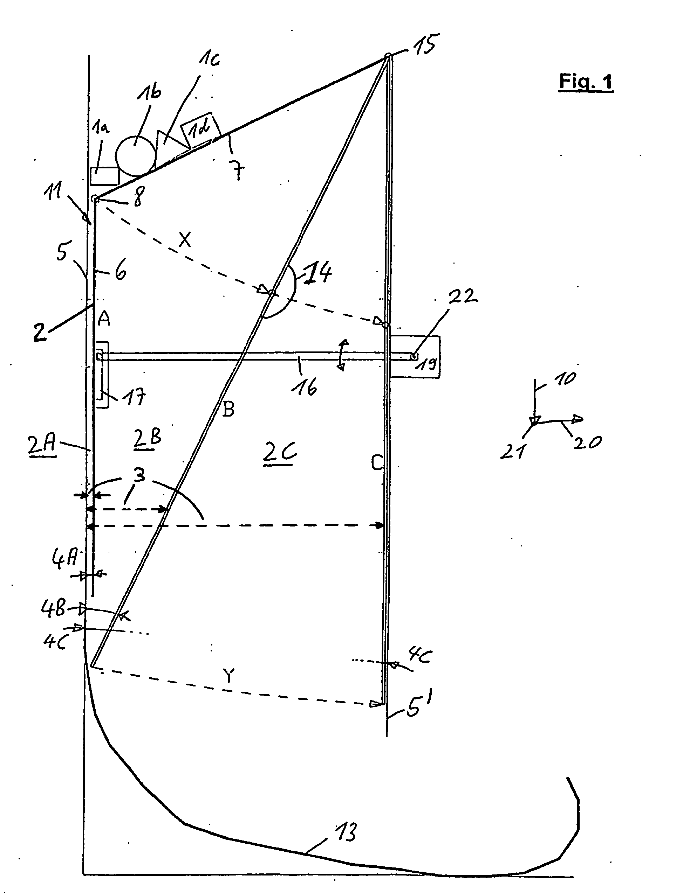

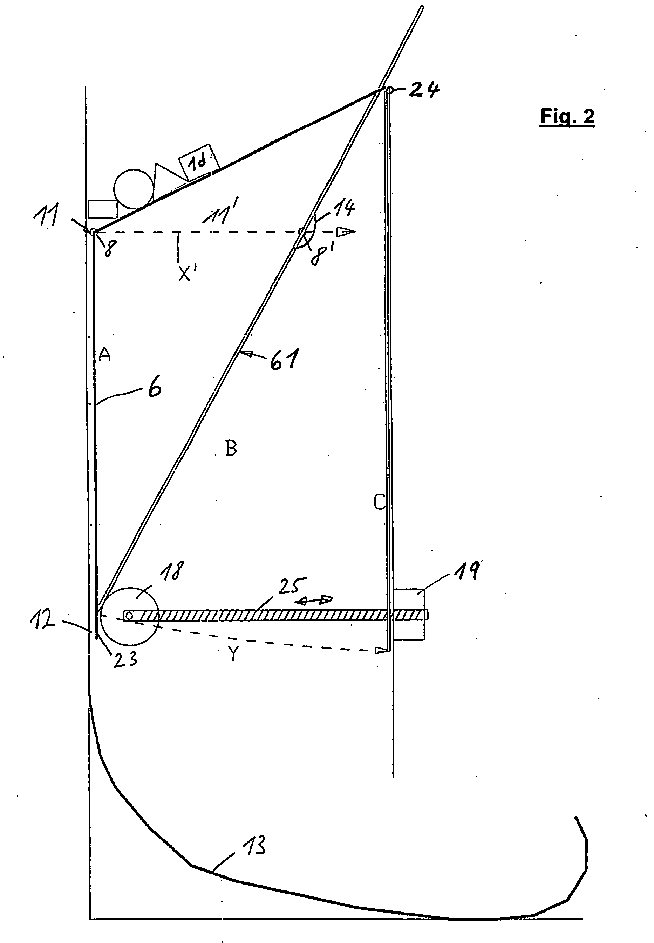

In den Figuren 1 und 2 wird der Kanal auf der einen Seite durch die feste Kanalwand 5 und auf der anderen Seite durch die bewegliche Kanalwand 6 begrenzt. Das untere Ende der beweglichen Kanalwand 6 stellt somit den Ausgang 12 dar, das obere Ende den Eingang 11.

Das obere Ende der beweglichen Wand 6 ist über ein Gelenk 8 gelenkig mit einer Zufuhrrutsche 7 verbunden, die vom Gelenk 8 aus sich von der festen Kanalwand 5 so schräg nach oben weg erstreckt, dass darauf aufliegende Waren 1a,b.. entlang der Zufuhrrutsche 7 zuverlässig bis zur Anlage an der festen Kanalwand 5 oder einer diesbezüglich davor liegenden Ware gleiten, also in Richtung Eingang 11 des Kanals 2 drängen.

In allen drei Figuren ist die aus beweglicher Kanalwand 6 und Zufuhrrutsche 7 gebildete Einheit in drei Zuständen "A", "B", "C" dargestellt. "A" stellt dabei den Ausgangszustand dar, in dem der Konuswinkel 4 zwischen beweglicher Wand 6 und fester Wand 5 Null oder minimal klein ist, er ist in Fig.1 mit 4A bezeichnet.

"B" stellt den Zwischenzustand dar, in dem der Zwischenwinkel 14 zwischen beweglicher Wand 6 und Zufuhrrutsche 7 auf der kanal-abgewandten Seite die maximal zulässige Größe, in der Regel 180°, erreicht, jedoch das untere Ende der beweglichen Wand 6 noch an der festen Kanalwand 5 und/oder der in diese übergehenden Auslaufwanne 13 anliegt.

"C" ist der Endzustand, in dem das untere Ende der beweglichen Wand 6 den maximal möglichen Abstand von der festen Wand 5 eingenommen hat. Im Zustand "C" ist dies in der Regel auch für das Gelenk 8 und damit das untere Ende der Zufuhrrutsche. In der Regel liegen die bewegliche Wand 6 und die Zufuhrrutsche 7 in einer Ebene fluchtend plan an der Gegenwand 5' des Kanals an.

In Fig. 1 ist zusätzlich das obere Ende der Zufuhrrutsche 7 mittels eines Gelenkes 15 an einem von der festen Wand 5 beabstandeten Punkt, in der Regel der Gegenwand 5', fixiert.

Das gezielte Herabrutschen der Waren 1a, 1b.. nach unten durch Übergang des Ausgangszustands "A" über den Zwischenzustand "B" in den Endzustand "C" wird erzielt durch zeitlich gesteuerten kontinuierlichen Übergang der Zustände "A", "B" und "C".

Zu diesem Zweck greift auf der Rückseite der beweglichen Wand 6 ein Schwenkhebel 16 an, der um sein von der beweglichen Wand 6 beabstandetes Ende, welches in einer Schwenkachse 22 gelagert ist, herum verschwenkbar ist, und dessen anderes, an der beweglichen Wand 6 angreifendes Ende dort in einer Führung 17, die nach Art eines Langloches in Verlaufsrichtung der Wand 6 verläuft, geführt ist.

Ein Motor 19 schwenkt den Schwenkhebel 16 in der gewünschten Art und Weise.

Im Ausgangszustand "A" verläuft der Schwenkhebel 16 von seinem Schwenkpunkt aus horizontal oder leicht nach unten abfallend zur beweglichen Wand 6 hin.

Durch zunehmende Verschwenkung entgegen dem Uhrzeigersinn um seine Schwenkachse 22 durchläuft das obere Ende der beweglichen Wand 6, nämlich das Gelenk 8, eine kreisbogenförmige Bewegungsbahn "x" um das Gelenk 15 herum, wobei sich gleichzeitig das untere Ende 23 der beweglichen Wand 6 entlang der festen Wand 5 absenkt. Zu diesem Zweck muss sich der Schwerpunkt der aus beweglicher Wand 6, Zufuhrrutsche 7 und darauf lastender Waren 1a,1b ... gebildeten Funktionseinheit in Fig. 1 rechts, also auf der von der festen Wand 5 abgewandten Seite, des Angriffspunktes des Schwenkhebels 16 an der beweglichen Wand 6, befinden. Der Konuswinkel 4 nimmt jetzt den Zustand 4B ein; es ist der Zwischenzustand "B" erreicht.

Durch weiteres Verschwenken des Schwenkhebels 16 gegen den Uhrzeigersinn über den Zwischenzustand "B", also der gestreckten Lage der beweglichen Wand 6 bezüglich der Zufuhrrutsche 7, hinaus, sind zwei Bewegungsvarianten möglich: Entweder ist das Gelenk 8 so ausgebildet, es nur einen maximal zulässigen Zwischenwinkel 14 zwischen diesen beiden Bauteilen, gemessen auf deren kanalabgewandter Rückseite, einnehmen kann und dann durch Anschlag etc. blockiert. Sobald dieser maximale Zwischenwinkel 14, in der Regel die gestreckte 180°-Lage, erreicht ist, entfernt sich bei weiterem Verschwenken des Schwenkhebels 16 das untere Ende 23 der beweglichen Wand 6 von der festen Wand 5 und bewegt sich sodann entlang einer kreisbogenförmigen Bewegungsbahn "y" bezüglich des Gelenkes 15. Bei Anlage an der Gegenwand 5' ist der Zustand "C" erreicht, der Kanal 2 ist weit geöffnet 2C, der Konuswinkel hat den Wert 4C eingenommen.

Kann das Gelenk 8 dagegen jeden Zwischenwinkel einnehmen, so kann sich das Gelenk 8 entlang der kreisbogenförmigen Bewegungsbahn "X" bis zum Anschlag, etwa an die Gegenbahn 5', bewegen, bevor sich das untere Ende 23 der beweglichen Wand 6 und der festen Wand 5 zu entfernen beginnt. Wann dies geschieht, ist von der Momentanlage des Schwerpunktes der oben erwähnten Funktionseinheit abhängig, der sich ja durch das Herabrutschen der Waren im Kanal 2 ständig ändert.

Die Ausführungsvariante gemäß der Fig. 2 unterscheidet sich von der Lösung gemäß Fig. 1 dadurch, dass das obere Ende der Zufuhrrutsche 7 nicht über ein Gelenk an der Umgebung fixiert ist, sondern gegenüber einem dort vorhandenen Stützpunkt, beispielsweise einer unterstützenden Gleitrolle 24, in Querrichtung verschoben werden kann.

Dadurch müssen weder das Gelenk 8 noch das untere Ende 23 der beweglichen Wand 6 eine kreisbogenförmigen Bewegungen um das obere Ende der Zufuhrrutsche 7 vollziehen. Vielmehr ist es möglich, beispielsweise das Gelenk 8 beim Übergang vom Ausgangszustand "A" in die Zustände "B", "C" linear, beispielsweise horizontal entlang der Bewegungsbahn "X' " zu verfahren.

Auch für das Angreifen des bewegenden Motors 19 ist eine andere Lösung dargestellt, nämlich das Bewegen einer Stützrolle 18, die die Rückseite 61 der beweglichen Wand 6 lediglich abstützt, und dadurch in linearer Richtung, beispielsweise der Horizontalen, beispielsweise mittels einer Gewindespindel 25, die vom Motor 19 angetrieben wird, verlagert werden kann.

Diese Lösung ist auch bei der Bauform gemäß Fig. 1 möglich. Auch bei dieser Lösung hängt der Zeitpunkt des Überganges vom Zwischenzustand "B" in den Endzustand "C", also Entfernung des unteren Endes 23 der beweglichen Wand 6 von der festen Wand 5, wie vorbeschrieben von der Ausbildung des Gelenkes 8 ab.

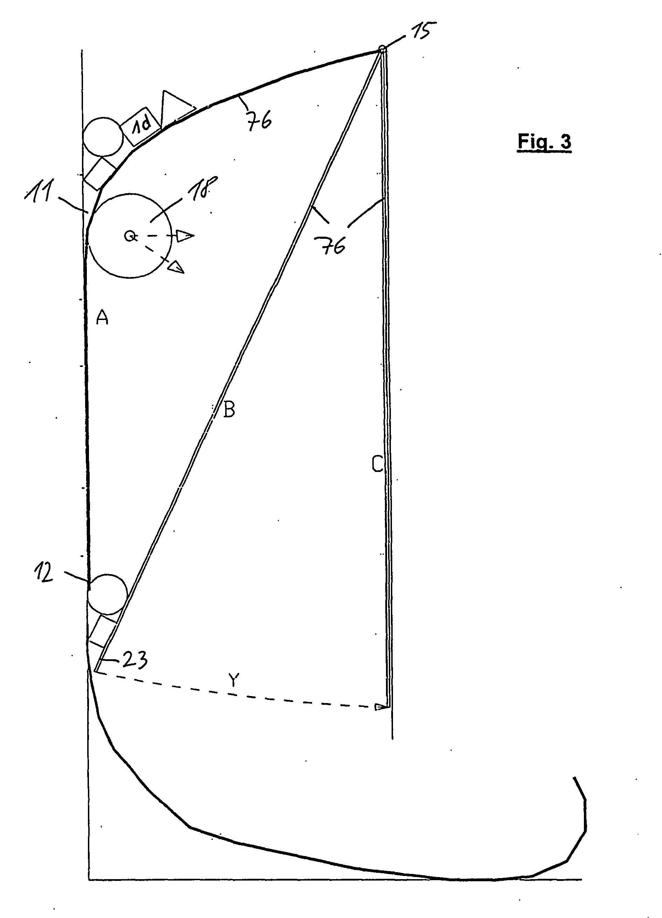

Fig. 3 zeigt eine Lösung, die hinsichtlich der Abstützung der beweglichen Wand 6 durch eine variable Stützrolle 18' der Lösung gemäß Fig. 2 entspricht. Allerdings ist die bewegliche Wand 6 zusammen mit der Zufuhrrutsche 7 einstückig miteinander als in Querrichtung 20 verbiegbare Platte 76 ausgebildet.

In nicht belastetem Zustand ist diese Platte 76 beispielsweise eben ausgebildet, wie in den Zuständen "B" und "C" dargestellt, kann jedoch in ihrem unbelasteten Zustand bereits eine Grund-Krümmung aufweisen.

Aus dem Zwischenzustand "B" heraus wird die Platte 76 durch Vorwärtsbewegen der variablen Stützrolle 18' in Richtung fester Wand 5 vorgespannt und dadurch zunehmend durchgebogen, so dass der unterhalb der variablen Stützrolle 18' liegende Teil der Platte 76 mehr und mehr und am Ende vollständig gegen die feste Wand 5 gepresst wird, wodurch der Ausgangszustand "A", also optimal kleiner Eingang 11 des Kanals 2, erreicht ist. Durch Rückbewegen der variablen Stützrolle 18', also zunehmende Beabstandung von der festen Wand 5, erfolgt der Übergang in die nicht mehr durchgebogene Form der Platte 76 gemäß Zwischenzustand "B", in dem jedoch nach wie vor deren unteres Ende 23 an der festen Wand 5 anliegt. Durch weiteres Entfernen der variablen Stützrolle 18' von der festen Wand 5 erfolgt der Übergang zum Endzustand "C".

### BEZUGSZEICHENLISTE

- 1a, 1b, 1c, 1d: Waren
- 2: Kanal
- 2A,2B,2C: verschiedene Zustände von Pos. 2
- 3: Breite
- 4: Konuswinkel
- 4A, 4B, 4C: verschiedene Zustände von Pos. 4
- 5: feste Kanalwand
- 5': Gegenwand
- 6: bewegliche Kanalwand
- 61: Rückseite
- 7: Zufuhrrutsche
- 8: Gelenk
- 10: Längsrichtung des Kanals
- 11: Eingang
- 12: Ausgang
- 13: Auslaufwanne
- 14: Zwischenwinkel
- 15: Gelenk
- 16: Schwenkhebel
- 17: Führung
- 18: Stützrolle
- 18': variable Stützrolle
- 19: Motor
- 20: Querschnittsrichtung (Querrichtung)
- 21: andere Querschnittsrichtung (Querrichtung)
- 22: Schwenkachse
- 23: unteres Ende
- 24: Gleitrolle
- 25: Gewindespindel
- 76: Platte
- X, Y, X': Bewegungsbahn
- A: Ausgangszustand
- B: Zwischenzustand
- C: Endzustand

## Patentansprüche

1. Verfahren zum schonenden Abwärts-Transportieren von Waren (1 a, 1b, 1c...) mittels Schwerkraft, bei dem die Waren (1a, 1b, 1c...) einen abwärts gerichteten, sich nach unten konisch verjüngenden Kanal (2), hinabrutschen, wobei der Kanal (2) von wenigstens einer beweglichen Kanalwand (6) und insbesondere einer festen Kanalwand (5) begrenzt wird, zwischen denen ein Konuswinkel (4) eingeschlossen wird, **dadurch gekennzeichnet,**
**dass** ein Motor (19) mit der wenigstens einen beweglichen Kanalwand (6) in Wirkverbindung gebracht wird, und dass der Motor (19) derart zeitlich angesteuert wird, dass ein die Rutschgeschwindigkeit der Waren (1 a, 1 b, 1c...) bestimmender Kanalquerschnitt gezielt eingestellt wird, wobei in einer Ausgangssituation der Kanal (2) einen sehr geringen, insbesondere bei Null beginnenden Querschnitt aufweist, der zeitlich definiert vergrößert wird.

2. Verfahren nach Anspruch 1,
**dadurch gekennzeichnet, dass** die Beeinflussung der Rutschgeschwindigkeit durch Veränderung des Konuswinkels (4) des Kanals (2) geschieht.

3. Verfahren nach Anspruch 1 oder 2,
**dadurch gekennzeichnet, dass** die Beeinflussung der Rutschgeschwindigkeit durch Verändern der Breite (3) des Kanals (2) geschieht.

4. Verfahren nach einem der vorhergehenden Ansprüche,
**dadurch gekennzeichnet, dass** das Herantransportieren der Waren (1a, 1b, 1c..) zum Eingang (11) des Kanals (2) durch Schwerkraft, insbesondere durch Heranrutschen auf einer schrägen Ebene und/oder Hinabrutschen entlang eines vorgeschalteten analogen Kanals, geschieht.

5. Verfahren nach einem der vorhergehenden Ansprüche,
**dadurch gekennzeichnet, dass** das Heraustransportieren der Waren (1a, 1b, 1c..) aus dem Kanal (2) durch öffnen des Ausganges (12) des Kanals (2), und insbesondere durch Hineinrutschen in die eine Schräge einer Auslauf-Wanne (13) und insbesondere Entnehmen der Waren (1a, 1b, 1c...) aus dem anderen Ende der Wanne (13) geschieht.

6. Verfahren nach einem der vorhergehenden Ansprüche,
**dadurch gekennzeichnet, dass** die Bewegung der wenigstens einen beweglichen Kanalwand (6) zur Beeinflussung der Rutschgeschwindigkeit zweiphasig abläuft mit
- Zunahme des Konuswinkels (4), insbesondere von 0° aus beginnend und
- Vergrößerung des Ausganges (12), insbesondere bei 0 beginnend.

7. Verfahren nach Anspruch 6,
**dadurch gekennzeichnet, dass** die erste und die zweite Phase der Bewegung der wenigstens einen beweglichen Kanalwand (6) zeitlich wenigstens teilweise gleichzeitig ablaufen.

8. Transportvorrichtung für den schonenden Abwärtstransport von Waren (1a, 1b, 1c...) mittels Schwerkraft, mit einem abwärts gerichteten, sich konisch nach unten verjüngenden Kanal (2), der von wenigstens einer beweglichen Kanalwand (6) begrenzt ist, wobei der Kanal (2) eine Breite (3) in wenigstens einer Querschnittsrichtung (20) des Kanals (2) aufweist, die variierbar ist, wobei der Kanal (2) in der variablen Querschnittsrichtung (20) von der wenigstens einen beweglichen Kanalwand (6) und einer festen Kanalwand (5) begrenzt wird, und die Breite (3) des Kanals (3) in der wenigstens einen, variablen die Breite (3) des Kanals (3) in der wenigstens einen, variablen Querschnittsrichtung (20) betrachtet in Längsrichtung (10) des Kanals von oben nach unten abnimmt, **dadurch gekennzeichnet,**
**dass** die bewegliche Kanalwand (6) von einem Motor (19) derart antreibbar ist, dass eine die Rutschgeschwindigkeit der Waren (1a, 1b, 1c...) bestimmende Kanalbreite (3) gezielt einstellbar ist.

9. Transportvorrichtung nach Anspruch 8,
**dadurch gekennzeichnet, dass** die bewegliche Kanalwand (6) bezüglich der festen Kanalwand (5) so beweglich ist, dass dabei der Konuswinkel (4) dazwischen konstant bleibt und die Breite (3) des Kanals (2) zwischen den beiden Kanalwänden (5,6) variabel ist.

10. Transportvorrichtung nach Anspruch 8 oder 9,
**dadurch gekennzeichnet, dass** die bewegliche Kanalwand (6) bezüglich der festen Kanalwand (5) so beweglich ist, dass der Konuswinkel (4) zwischen den Kanalwänden (5,6) verändert wird und **dadurch** auch die Breite (3) zwischen den Kanalwänden (5,6).

11. Transportvorrichtung nach einem der Ansprüche 8 - 10,
**dadurch gekennzeichnet, dass** die bewegliche Kanalwand (6) an ihrem oberen Ende mit einer Zufuhrrutsche (7) gelenkig verbunden ist, insbesondere mittels eines Gelenkes (8).

12. Transportvorrichtung nach Anspruch 11,
**dadurch gekennzeichnet, dass** das Gelenk (8) so ausgebildet ist, dass der Zwischenwinkel (14) auf der dem Kanal (2) abgewandten Seite zwischen beweglicher Kanalwand (6) und Zufuhrrutsche (7) begrenzt ist, insbesondere auf maximal 180° begrenzt ist.

13. Transportvorrichtung nach Anspruch 11 oder 12,
**dadurch gekennzeichnet, dass** die Zufuhrrutsche (7) an ihrem oberen Ende an einem Gelenk (15) ortsfest, aber beweglich fixiert ist.

14. Transportvorrichtung nach Anspruch 13,
**dadurch gekennzeichnet, dass** das Gelenk (8) kreisbogenförmig bezüglich des Gelenkes (15) beweglich ist.

15. Transportvorrichtung nach einem der Ansprüche 11 - 14,
**dadurch gekennzeichnet, dass** das Gelenk (8) linear quer zur Längsrichtung (10) des Kanals (2) mit Komponenten der variablen Querschnittsrichtung (20) beweglich ist.

16. Transportvorrichtung nach einem der Ansprüche 8 - 15,
**dadurch gekennzeichnet, dass** die bewegliche Kanalwand (6)
- insbesondere von dem Motor (19) mittels eines Schwenkhebels (16) bewegt wird, der insbesondere auf der Rückseite der beweglichen Kanalwand (6) dort in eine langlochähnliche Führung (17) eingreift oder
- eine Stütze aufweist, insbesondere eine Stützrolle (18), die die Rückseite der beweglichen Kanalwand (6) abstützt und insbesondere linear mit Komponenten in der variablen Querrichtung (20) vom Motor (19) bewegbar ist.

17. Transportvorrichtung nach einem der Ansprüche 11 - 16,
**dadurch gekennzeichnet, dass** die bewegliche Kanalwand (6) und die Zufuhrrutsche (7) einstückig zusammen ausgebildet sind und in der variablen Querrichtung (20) wenigstens in Teilbereichen elastisch sind.

## Claims

1. A method for gentle downward conveyance of goods (1a,1b,1c...) by means of gravity, in which the goods (1a,1b,1c...) slide down a downward directed conically tapered chute (2), with the chute (2) being delimited by at least one moveable chute wall (6) and, in particular, a stationary wall (5) by which the cone angle (4) is formed,
wherein a motor (19) is brought to interact with at least one moveable chute wall (6) and the motor (19) is temporally triggered in such a manner that a chute cross section is selectively set which determines the sliding velocity of the goods (1a,1b,1c...), with in a starting situation of chute (2) a very small cross section, in particular beginning from zero, is enlarged in a temporally defined manner.

2. The method according to claim 1,
wherein influencing the sliding velocity occurs by changing the cone angle (4) of the chute (2).

3. The method according to claim 1 or 2,
wherein influencing the sliding velocity occurs by changing the width (3) of the chute.

4. The method according to one of the preceding claims,
wherein conveyance of the goods (1a,1 b,1c..) to the entrance (11) of the chute (2) occurs by means of gravity, in particular by sliding to the entrance on an inclined plane and/or sliding down along an upstream analogue channel.

5. The method according to one of the preceding claims,
**wherein** conveyance of the goods (1a,1b,1c...)from the chute (2) occurs by opening the exit (12) of the chute (2), and in particular by sliding into the one incline of a discharge trough (13) and, in particular, removal of the goods (1a,1b,1c...) from the other end of the trough (13).

6. The method according to one of the preceding claims,
wherein for influencing the sliding velocity, movement of at least one moveable chute wall (6) occurs in two phases:
- increasing the cone angle (4), in particular starting from 0° and
- enlarging the exit (12), in particular starting from 0°.

7. The method according to claim 6,
wherein the first and the second phase of the movement of the at least one moveable chute wall (6) occurs temporally at least partly simultaneously.

8. A conveyance device for gentle downward conveyance of goods (1a,1b,1c..) by means of gravity having a downward directed conically downward tapered chute (2) which is delimited by at least one moveable chute wall (6), with the chute (2) having a width (3) in at least one cross section direction (20) of the chute (2) which is variable and with the chute (2) being delimited in the variable cross section direction (20) by at least one moveable chute wall (6) and a stationary chute wall (5), and the width (3) of the chute (2) in the at least one variable cross section direction (20) viewed from the top in longitudinal direction (10) of the chute decreases from the top downward,
wherein the moveable chute wall (6) is drivable by a motor (19) in such a manner that a certain width (3) of the chute can selectively be set which determines the sliding velocity of the goods (1a,1b,1c...).

9. The conveyance device according to claim 8,
wherein the moveable chute wall (6) is moveable in relation to the stationary chute wall (5) in such a manner that the cone angle (4) remains constant therebetween and the width (3) of the chute(2) between the two chute walls is variable.

10. The conveyance device according to claim 8 or 9,
wherein the moveable chute wall (6) is moveable in relation to the stationary chute wall (5) in such a manner that the cone angle (4) between the chute walls is altered and thereby also the width (3) between the chute walls (5,6).

11. The conveyance device according to one of the claims 8 to 10,
wherein the moveable chute wall (6) is connected in an articulate manner at its upper end to a feed slide (7), in particular by means of a joint (8).

12. The conveyance device according to claim 11,
wherein the joint (8) is constructed in such a manner that the intermediate angle (14) on the side facing away from the chute (2) between the moveable wall (6) and the feed slide (7) is limited, in particular is limited to maximally 180°.

13. The conveyance device according to claim 11 or 12,
wherein the feed slide (7) is fixed at is upper end to a joint (15) in a stationary but flexible manner.

14. The conveyance device according to claim 13,
wherein the joint (8) is moveable in a circular-arc-shaped manner in relation to the joint (15).

15. The conveyance device according to one of the claims 11 to 14,
wherein the joint (8) is linearly moveable transverse to the longitudinal direction (10) of the chute (2) with components of the variable cross section direction (20).

16. The conveyance device according to one of the claims 8 to 15,
wherein the moveable chute wall (6)
- is, in particular, moved by the motor (19) by means of a turning lever (16) which, in particular, acts on the rear side of the movable chute wall (6) in an elongated-hole like guide (17) thereon or
- is provided with a support, in particular a supporting roll (18) which supports the rear side of the moveable chute wall (6) and, in particular, is linearly moveable with components in the variable cross section direction (20) by the motor (19).

17. The conveyance device according to one of the claims 11 to 16,
**wherein** the moveable chute wall (6) and the feed slide (7) are constructed one-piece and are elastic in the variable transverse direction (20) at least in some parts thereof.

## Revendications

1. Procédé pour le transport préservateur vers le bas de produits (1a, 1b, 1c...) au moyen de la force de gravité, selon lequel les produits (1a, 1b, 1c,...) glissent vers le bas le long d'un conduit descendant (2), se rétrécissant vers le bas
le conduit (2) étant délimité par au moins une paroi mobile du conduit (6) et notamment par une paroi fixe du conduit (5), qui forment entre elles un angle conique (4), **caractérisé en ce qu'**un moteur (19) est amené en interaction avec la au moins une paroi mobile du conduit (6) et **en ce que** le moteur (19) est actionné temporairement de façon à régler de manière adéquate une section transversale de conduit déterminant la vitesse de glissement des produits (1a, 1b, 1c...), dans une position initiale, le conduit (2) présentant une section transversale infime, commençant notamment à zéro, qui s'agrandit de façon définie dans le temps.

2. Procédé selon la revendication 1, **caractérisé en ce que** la vitesse de glissement est influencée par variation de l'angle conique (4) du conduit (2).

3. Procédé selon la revendication 1 ou 2, **caractérisé en ce que** la vitesse de glissement est influencée par variation de la largeur (3) du conduit (2).

4. Procédé selon l'une quelconque des revendications précédentes, **caractérisé en ce que** l'acheminement des produits (1a, 1b, 1c..) vers l'entrée (11) du conduit (2) est assuré par force de gravité, notamment par glissement sur un plan incliné et/ou par glissement vers le bas le long d'un conduit analogue, monté en amont.

5. Procédé selon l'une quelconque des revendications précédentes, **caractérisé en ce que** le transport des produits (1a, 1b, 1c..) hors du conduit (2) est assuré par ouverture de la sortie (12) du conduit (2), et notamment par glissement dans l'une des inclinaisons d'une cuve de prélèvement (13) et notamment par prélèvement des produits (1a, 1b, 1 c...) à partir de l'autre extrémité de la cuve (13).

6. Procédé selon l'une quelconque des revendications précédentes, **caractérisé en ce que** le déplacement de la au moins une paroi mobile du conduit (6) pour l'influence de la vitesse de glissement se déroule en deux phases, avec
- augmentation de l'angle conique (4), notamment à partir de 0° et
- agrandissement de la sortie (12), notamment à partir de 0°.

7. Procédé selon la revendication 6,
**caractérisé en ce que** la première et la deuxième phase du déplacement de la au moins une paroi mobile du conduit (6) se déroulent de façon au moins partiellement simultanée dans le temps.

8. Dispositif de transport pour le transport préservateur vers le bas de produits (1a, 1b, 1c...) au moyen de la force de gravité, avec un conduit (2) descendant, se rétrécissant sous forme conique vers le bas, qui est délimité par au moins une paroi mobile du conduit (6), le conduit (2) présentant dans au moins une direction de section transversale (20) du conduit (2) une largeur (3) qui est variable, le conduit (2) étant délimité dans la direction de section transversale variable (20) par la au moins une paroi mobile du conduit (6) et par une paroi fixe du conduit (5) et la largeur (3) du conduit (3), considérée dans la au moins une direction de section transversale variable (20) décroissant du haut vers le bas, dans la direction longitudinal (10) du conduit, **caractérisé en ce que** la paroi mobile du conduit (6) peut être entraînée par un moteur (19), de façon à permettre un réglage adéquat d'une largeur de conduit (3) déterminant la vitesse de glissement des produits (1a,1b, 1c...).

9. Dispositif de transport selon la revendication 8, **caractérisé en ce que** la paroi mobile du conduit (6) est mobile par rapport à la paroi fixe du conduit (5), de façon à ce que l'angle conique (4) entre les deux reste constant à cet effet et que la largeur (3) du conduit (2) soit variable entre les deux.

10. Dispositif de transport selon la revendication 8 ou 9, **caractérisé en ce que** la paroi mobile du conduit (6) est mobile par rapport à la paroi fixe du conduit (5) de façon à ce que l'angle conique (4) entre les parois du conduit (5, 6) varie et de ce fait également la largeur (3) entre les parois du conduit (5, 6).

11. Dispositif de transport selon l'une quelconque des revendications 8 à 10, **caractérisé en ce que** la paroi mobile du conduit (6) est reliée de façon articulée sur son extrémité supérieure avec une goulotte d'alimentation (7), notamment au moyen d'une articulation (8).

12. Dispositif de transport selon la revendication 11, **caractérisé en ce que** l'articulation (8) est conçue de façon à ce que l'angle intermédiaire (14) sur le côté opposé au conduit (2) entre la paroi mobile du conduit (6) et la goulotte d'alimentation (7) soit limité, notamment à un maximum de 180°.

13. Dispositif de transport selon la revendication 11 ou 12,
**caractérisé en ce que** la goulotte d'alimentation (7) est fixée sur sa partie supérieure de façon stationnaire, mais mobile sur une articulation (15).

14. Dispositif de transport selon la revendication 13, **caractérisé en ce que** l'articulation (8) est mobile en forme d'arc de cercle par rapport à l'articulation (15).

15. Dispositif de transport selon l'une quelconque des revendications 11 à 14, **caractérisé en ce que** l'articulation (8) est mobile de façon linéaire, à la transversale de la direction longitudinale (10) du conduit (2) avec des composantes de la direction de section transversale variable (20).

16. Dispositif de transport selon l'une quelconque des revendications 8 à 15, **caractérisé en ce que** la paroi mobile du conduit (6) est déplacée notamment par le moteur (19), au moyen d'un levier pivotant (16), qui s'engage notamment sur la face arrière de la paroi mobile du conduit (6) à cet endroit dans un guidage (17) analogue à un trou oblong ou comporte un appui, notamment un galet d'appui (18) qui soutient la face arrière de la paroi mobile du conduit (6) et qui est notamment mobile de façon linéaire avec des composantes dans la direction transversale variable (20), sous l'effet du moteur (19).

17. Dispositif de transport selon l'une quelconque des revendications 11 à 16, **caractérisé en ce que** la paroi mobile du conduit (6) et la goulotte d'alimentation (7) sont conçues en association en monobloc et sont élastiques au moins dans des zones partielles, dans la direction transversale variable (20).
